(19) Europäisches Patentamt
European Patent Office
Office européen des brevets

(11) **EP 4 502 915 A1**

(12) **EUROPEAN PATENT APPLICATION**
published in accordance with Art. 153(4) EPC

(43) Date of publication:
05.02.2025 Bulletin 2025/06

(21) Application number: 22935012.9

(22) Date of filing: 28.03.2022

(51) International Patent Classification (IPC):
*G06Q 50/10* (2012.01)

(52) Cooperative Patent Classification (CPC):
G06Q 50/10

(86) International application number:
PCT/JP2022/014814

(87) International publication number:
WO 2023/187857 (05.10.2023 Gazette 2023/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Hitachi, Ltd.
Tokyo 100-8280 (JP)

(72) Inventors:
• HORII, Yoichi
Tokyo 100-8280 (JP)

• YAMAGATA, Shohei
Tokyo 100-8280 (JP)
• MORIKAWA, Tatsuya
Tokyo 100-8280 (JP)
• MIYAKI, Mariko
Tokyo 100-8280 (JP)
• SHIMADA, Seito
Tokyo 100-8280 (JP)

(74) Representative: Mewburn Ellis LLP
Aurora Building
Counterslip
Bristol BS1 6BX (GB)

(54) **RESOURCE CIRCULATION MANAGEMENT DEVICE, RESOURCE CIRCULATION MANAGEMENT METHOD, AND RESOURCE CIRCULATION MANAGEMENT SYSTEM**

(57)    A resource circulation management apparatus 10 executes creating, based information about a plurality of business operators in a circulation of a resource, information about a closed curve indicating the circulation of the resource for an output area of an output device, and executes creating, based on resource circulation data, drawing data for outputting a business operator figure indicating the business operator to a predetermined position on the closed curve in the output area, outputting, to the output area, a connection figure connecting a business operator figure of a first business operator and a business operator figure of a second business operator as a figure indicating a flow of the resource from the first business operator to the second business operator and setting a shape or a color of the connection figure to a shape or a color reflecting a flow rate of the resource, and outputting, to the output area, a figure whose start point or end point is a position of a business operator figure of the business operator as a figure indicating a flow of the resource between the business operator and the another business operator and setting a shape or a color of the figure to a shape or a color reflecting the flow rate of the resource.

[FIG. 4]

EP 4 502 915 A1

# Description

## BACKGROUND

### Technical Field

The present invention relates to a resource circulation management apparatus, a resource circulation management method, and a resource circulation management system.

### Background Art

Recently, business operators and consumers have become increasingly aware of resource circulation from the viewpoint of depletion of global resources, sustainable resource use, and environmental pollution control. For example, the concept of the circular economy includes various ideas such as recycling, modular design, and long-term use through repair.

As a method of presenting information about such resource circulation to a user, for example, PTL 1 discloses an "information processing method of acquiring component information of ethanol derived from waste obtained from waste-derived synthetic gas, acquiring ethanol identification information for identifying the ethanol, and outputting the acquired component information of the ethanol to a blockchain in association with the ethanol identification information". PTL 2 discloses a method of expressing flow rates between devices by thickness of the flow in a simulation of a water treatment device.

### Citation List

### Patent Literature

     PTL 1: JP2021-166499A
     PTL 2: JP2017-966A

## SUMMARY OF INVENTION

### Technical Problem

In resource circulation, various types of resources are circulated. However, the method of PTL 1 focuses on the circulation of one resource, and the flows of a plurality of resources cannot be expressed simultaneously. In the method of PTL 2, the positioning of the device to be displayed needs to be manually by an operator. In addition, in these methods, only data related to simple resource circulation can be input, and resource circulation having a plurality of circulation routes or in which exchange with the outside occurs cannot be handled.

The present invention has been made in view of such a current situation, and an object thereof is to provide a resource circulation management apparatus, a resource circulation display method, and a resource circulation management system capable of expressing resource circulation having a complicated configuration.

### Solution to Problem

One of the inventions for solving the above problems is a resource circulation management apparatus including: a storage device configured to store resource circulation data including information about a plurality of business operators in a circulation of a resource that is performed by the plurality of business operators, information about an amount of the resource circulated by the plurality of business operators, information about another business operator other than the plurality of business operators, and information about a migration of the resource between the business operator and the another business operator; and a processing device configured to create, based on the information about the plurality of business operators, information about a closed curve indicating the circulation of the resource for an output area in a predetermined output device, and create, based on the resource circulation data, drawing data for outputting a business operator figure indicating the business operator to a predetermined position on the closed curve in the output area, outputting, to the output area, a connection figure that connects a business operator figure indicating a first one of the business operator and a business operator figure indicating a second one of the business operator as a figure indicating a flow of the resource from the first business operator to the second business operator and setting a shape or a color of the connection figure to a shape or a color reflecting a flow rate of the resource, and outputting, to the output area, a figure whose start point or end point is a position of a business operator figure of the business operator as a figure indicating a flow of the resource between the business operator and the another business operator and setting a shape or a color of the figure to a shape or a color reflecting the flow rate of the resource.

### Advantageous Effects of Invention

According to the invention, it is possible to express resource circulation having a complicated configuration.

Configurations, effects, and the like other than those described above will become apparent in the following description of an embodiment.

### BRIEF DESCRIPTION OF DRAWINGS

     [FIG. 1] FIG. 1 is a diagram illustrating an example of a configuration of a resource circulation management system according to an embodiment.

[FIG. 2] FIG. 2 is a diagram illustrating an example of main functions of a resource circulation management apparatus.

[FIG. 3] FIG. 3 is a flowchart illustrating an outline of processing performed by the resource circulation management apparatus.

[FIG. 4] FIG. 4 is a diagram illustrating an example of a resource circulation data management screen displayed in input processing.

[FIG. 5] FIG. 5 is a diagram illustrating an example of a business operator database.

[FIG. 6] FIG. 6 is a diagram illustrating an example of a supply chain database.

[FIG. 7] FIG. 7 is a diagram illustrating an example of a short circuit flow database.

[FIG. 8] FIG. 8 is a diagram illustrating an example in which an amount (or the number) of each flow is displayed in color density.

[FIG. 9] FIG. 9 is a diagram illustrating an example in which a supply chain (food supply chain) in a food field is drawn in a drawing area.

[FIG. 10] FIG. 10 is a diagram illustrating an example of drawing processing of a business operator figure, a connection figure in a closed curve, a linear outflow figure, and a short circuit flow figure.

[FIG. 11] FIG. 11 is a diagram illustrating another example of a closed curve representing a circulation system of resources.

[FIG. 12] FIG. 12 is a diagram illustrating another example of the business operator figure.

[FIG. 13] FIG. 13 is a diagram illustrating another example of the connection figure that connects the business operator figures.

[FIG. 14] FIG. 14 is a diagram illustrating another example of a figure illustrating a flow of resources between business operators.

[FIG. 15] FIG. 15 is a diagram illustrating another configuration example of a circulation figure.

[FIG. 16] FIG. 16 is a diagram illustrating another configuration example of the circulation figure.

[FIG. 17] FIG. 17 is a diagram illustrating another example of the circulation figure.

DESCRIPTION OF EMBODIMENTS

An embodiment according to the invention will be described with reference to the drawings.

System Configuration

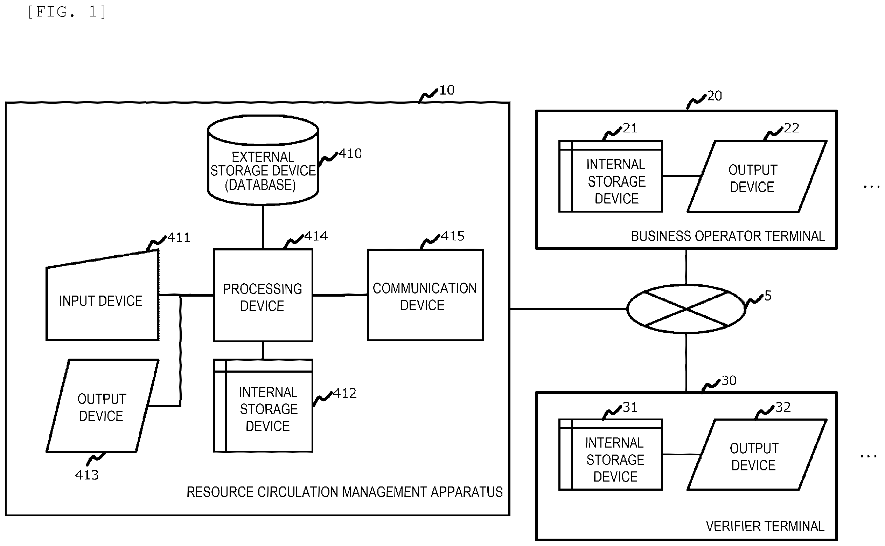

FIG. 1 is a diagram illustrating an example of a configuration of a resource circulation management system 1 according to the present embodiment. The resource circulation management system 1 is an information processing system used by a business operator (stakeholder) when each business operator uses a predetermined resource (or a plurality of types of resources in some cases) to perform various businesses in a supply chain implemented by a plurality of the business operators and the resource is circulated among the business operators.

That is, the resource circulation management system 1 includes a resource circulation management apparatus 10, one or a plurality of business operator terminals 20, and one or a plurality of verifier terminals 30. The resource circulation management apparatus 10, the business operator terminal 20, and the verifier terminal 30 can communicate by the Internet, a local area network (LAN), a wide area network (WAN), or a wired or wireless communication network 5 such as a dedicated line.

The business operator terminal 20 is an information processing apparatus (first information processing apparatus) used by each business operator implementing the supply chain. The business operator terminal 20 receives an input of information about a resource circulation (hereinafter, referred to as resource circulation data) from the business operator (user) via a predetermined input device. The input information is transmitted to the resource circulation management apparatus 10. The information about the resource circulation includes, for example, information about the business operator, information about circulating resources, a circulation amount (procurement amount, discharge amount, or the like) of the resource, and information about a business operator that does not implement the resource circulation but is a resource procurement source or a resource discharge destination.

The business operator terminal 20 receives drawing data to be described later from the resource circulation management apparatus 10 and outputs content indicated by the received drawing data to an output device.

The verifier terminal 30 is an information processing apparatus (second information processing apparatus) used by a related person (companies, organizations, and the like other than the business operators in the supply chains, for example, certification agencies or financial institutions) of the supply chain. The verifier terminal 30 receives the drawing data to be described later from the resource circulation management apparatus 10 and outputs the content indicated by the received drawing data to an output device.

The business operator terminal 20 and the verifier terminal 30 may be the same information processing apparatus.

The resource circulation management apparatus 10 is an information processing apparatus managed by a predetermined administrator (such as an information service provider). Based on the resource circulation data received from the business operator terminal 20, the resource circulation management apparatus 10 creates figure data (hereinafter, referred to as the drawing data) for outputting a flow of the resource circulation by each business operator in the supply chain to the output device. The resource circulation management apparatus 10 outputs the content of the data indicated by the created drawing data to the output device.

As illustrated in FIG. 1, the resource circulation management apparatus 10 includes a processing device 414 such as a central processing unit (CPU), a digital signal processor (DSP), a graphics processing unit (GPU), or a field-programmable gate array (FPGA), an internal storage device 412 such as a read only memory (ROM) or a random access memory (RAM), an external storage device 410 such as a hard disk drive (HDD) or a solid state drive (SSD), a communication device 415 implemented by a network interface card (NIC), a wireless communication module, a universal serial interface (USB) module, or a serial communication module, an input device 411 implemented by a mouse, a keyboard, or the like, and an output device 413 implemented by a liquid crystal display, an organic electro-luminescence (EL) display, a printer, or the like. In the present embodiment, the external storage device 410 stores a predetermined database to be described later, and the database may be provided in a device outside the resource circulation management apparatus 10.

The business operator terminal 20 and the verifier terminal 30 include internal storage devices 21 and 31 and output devices 22 and 32 similar to those of the resource circulation management apparatus 10, respectively, and further include processing devices, external storage devices, communication devices, and input devices (not illustrated) similar to those of the resource circulation management apparatus 10, respectively.

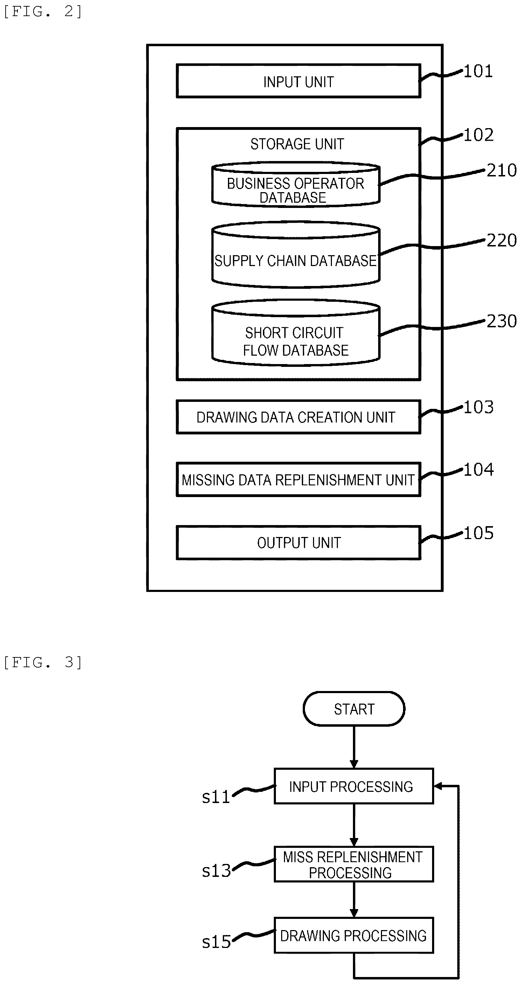

FIG. 2 is a diagram illustrating an example of main functions of the resource circulation management apparatus 10. The resource circulation management apparatus 10 includes functional units including an input unit 101, a storage unit 102, a drawing data creation unit 103, a missing data replenishment unit 104, and an output unit 105.

The input unit 101 receives the input of the resource circulation data from the user via the input device.

The storage unit 102 stores the received resource circulation data in each database (business operator database 210, supply chain database 220, and short circuit flow database 230). Details of each database will be described later.

The drawing data creation unit 103 creates the drawing data based on the resource circulation data.

For example, the drawing data creation unit 103 generates the drawing data for outputting a business operator figure indicating a business operator related to the circulation of the resource at a predetermined position on a closed curve (circle ring or the like) indicating the resource circulation in an output area of the output device. The output area is, for example, an area of a screen when the output device includes a screen, or a surface of paper that is an output medium when the output device is a printer or the like.

In order to indicate a flow of a resource from a certain business operator (first business operator) to another business operator (second business operator), the drawing data creation unit 103 outputs a connection figure that connects a business operator figure indicating the first business operator and a business operator figure indicating the second business operator to the output area, and creates the drawing data for setting a shape or a color of the connection figure to a shape or a color reflecting a flow rate of the resource.

The flow (migration) of the resource from the first business operator to the second business operator includes a circular inflow and a circular outflow. The circular inflow is related to resources (such as recycled materials, reused components, materials, and energy) that circulate in the supply chain, a reception (procurement) of the resources by the business operator. The circular outflow is related to the resources that circulate in the supply chain, a sending (discharge) of the resources from the business operator.

In addition, in order to indicate the flow of the resource between a business operator related to the resource circulation (hereinafter, referred to as an in-system business operator) and another business operator not implementing the resource circulation (hereinafter, referred to as an out-of-system business operator), the drawing data creation unit 103 outputs a figure whose start point or end point is a position of a business operator figure of the in-system business operator to the output area, and generates the drawing data for setting a shape or a color of the figure to a shape or a color reflecting the flow rate of the resource.

The flow (migration) of the resource from the in-system business operator to the out-of-system business operator includes a linear inflow and a linear outflow. The linear inflow is, related to resources that are not involved in either circular inflow or circular outflow (that is, resources that are not recycled), a reception (procurement) of the resources by the in-system business operator from the out-of-system business operator. The resources related to the linear inflow are, for example, virgin materials, newly manufactured components, or non-renewable energy derived from fossil fuels.

The linear outflow is, related to the resources that are not involved in either circular inflow or circular outflow (that is, resources that are not recycled), a sending (discharge) of the resources from the in-system business operator to the out-of-system business operator. The resources related to the linear outflow are, for example, resources that are discharged by the business operator and are targets of disposal such as landfill disposal (resources to be disposed of with a load on the environment).

Hereinafter, the circular inflow and the linear inflow may be collectively referred to as an inflow, the circular outflow and the linear outflow may be collectively referred to as an outflow, the circular inflow and the circular outflow may be collectively referred to as a circular flow, the linear inflow and the linear outflow may be collectively referred to as a linear flow, and the circular inflow, the linear inflow, the circular outflow, and the linear outflow may be collectively referred to as a flow.

Next, in the resource circulation according to the present embodiment, in addition to a first circulation implemented by all the in-system business operators (circular flow), there is a second circulation implemented by business operators obtained by excluding a part of the in-system business operators. That is, there is another resource circulation includes a flow (hereinafter, referred to as a short circuit flow) of resources between two separate in-system business operators that are not directly connected by the circular flow. That is, there is a flow of resources between two business operators that short-circuits a part of sections of the resource circulation between the business operators along the supply chain.

Therefore, the drawing data creation unit 103 according to the present embodiment creates the drawing data for outputting a figure indicating the first circulation and a figure indicating the second circulation.

That is, the drawing data creation unit 103 creates the drawing data for outputting, to the output area, a figure that connects a figure indicating a certain business operator (first business operator) in the first circulation and a figure indicating another business operator (second business operator) in the first circulation along the closed curve (circle ring or the like).

In addition, the drawing data creation unit 103 creates the drawing data for outputting, to the output area, a figure that connects a figure indicating a certain business operator (first business operator) in the second circulation and a figure indicating another business operator (second business operator) in the second circulation with a straight line or the like.

When it is determined that there is a miss or a contradiction in data of a migration amount of the resources between the in-system business operators or data of a migration amount of the resources between the in-system business operator and the out-of-system business operator in the resource circulation data, the missing data replenishment unit 104 sets data of a migration amount of the resource calculated based on the resource circulation data of a portion having no miss or no contradiction as a migration amount when there is a miss or a contradiction. The drawing data creation unit 103 creates the drawing data based on the corrected data.

The output unit 105 outputs (for example, displays on a screen) a figure indicating the drawing data created by the drawing data creation unit 103 in this way to an output area of the output device 413.

Functions of the functional units of the resource circulation management apparatus 10 described above are implemented by the processing device 414 reading and executing a program stored in the internal storage device 412 or the external storage device 410. The program can be recorded on, for example, a recording medium and distributed. The resource circulation management apparatus 10 may be implemented, in whole or in part, using a virtual information processing resource provided by using a virtualization technique, a process space separation technique, or the like, such as a virtual server provided by a cloud system. All or a part of functions provided by a search support apparatus 1 may be implemented by, for example, a service provided by a cloud system via an application programming interface (API) or the like.

Next, processing performed by the resource circulation management apparatus 10 will be described.

FIG. 3 is a flowchart illustrating an outline of the processing performed by the resource circulation management apparatus 10. The processing is started, for example, when the resource circulation management apparatus 10 is activated, or when a predetermined input is made from the user to the resource circulation management apparatus 10.

First, the resource circulation management apparatus 10 executes input processing s11 of receiving the input of the resource circulation data from the business operator terminal 20 (the user of the business operator).

The resource circulation management apparatus 10 checks the miss and the contradiction of data in the resource circulation data received in the input processing s11, and executes, when missing or contradictory data is detected, miss replenishment processing s13, which is processing of replenishing the resource circulation data with the data of this portion.

The resource circulation management apparatus 10 executes drawing processing s15 which is creating the drawing data based on the resource circulation data determined by the input processing s11 and the miss replenishment processing s13 and drawing a figure indicated by the created drawing data. Thereafter, the input processing s11 is repeated as needed.

Hereinafter, each processing will be described in detail.

Input Processing

(Resource Circulation Data Management Screen)

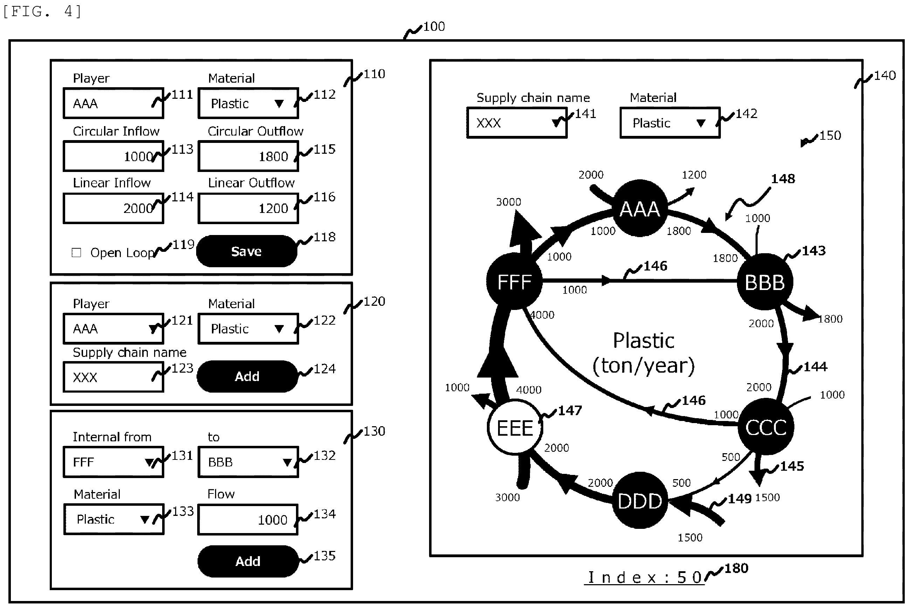

FIG. 4 is a diagram illustrating an example of a resource circulation data management screen that is an input screen displayed in the input processing s11. In the present embodiment, the resource circulation data management screen is displayed by the business operator terminal 20 but may be displayed by the resource circulation management apparatus 10 to receive an input of data from the user.

The resource circulation data management screen 100 includes a first input field 110 for receiving an input of information about the circular flow and the linear flow for each resource, a second input field 120 for receiving an input of information about the business operator, a third input field 130 for receiving an input of the short circuit flow, a resource circulation display field 140 that graphically displays the resource circulation data, and an evaluation index display field 180 that displays an evaluation index to be described later.

The first input field 110 includes a business operator name input field 111 for receiving an input of a name of the business operator related to the flow and a resource name input field 112 for receiving an input of a name of the resource related to the flow.

The first input field 110 includes a circular inflow number input field 113 for receiving an input of an amount (or the number) of the circular inflow, a linear inflow number input field 114 for receiving an input of an amount (or the number) of the linear inflow, a circular outflow number input field 115 for receiving an input of an amount (or the number) of the circular outflow, and a linear outflow input field 116 for receiving an input of an amount (or the number) of the linear outflow.

The first input field 110 further includes an out-of-supply-chain check field 119 which is designated when the business operator input to the business operator name input field 111 is an out-of-supply-chain business operator to be described later and a save field 118 which is designated when the information input to the first input field 110 is registered in the business operator database 210.

Next, the second input field 120 includes a business operator name input field 121 in which the name of the business operator is received, a resource name input field 122 in which a name of a resource handled by the business operator is received, a supply chain name 123 in which a name of the supply chain related to the business operator is received, and a supply chain save field 124 designated when the information received in these input fields is registered in the supply chain database 220.

Every time the supply chain save field 124 is designated, the information about the business operator received in the second input field 120 is added to a record of the supply chain database 220. That is, an order of registration of data is an order of resource circulation.

Next, the third input field 130 includes a migration source business operator input field 131 in which a name of a business operator of a migration source of the resource in the short circuit flow is received, a migration destination business operator input field 132 in which a name of a business operator of the migration source of the resource in the short circuit flow is received, a resource name input field 133 in which a name of a resource to be migrated in the short circuit flow is set, a flow number input field 134 in which an amount (or the number) of the short circuit flow is received, and a short circuit flow save field 135 designated when the information received in these input fields is stored in the short circuit flow database 230.

Database

Here, details of the databases described above will be described.

(Business Operator Database)

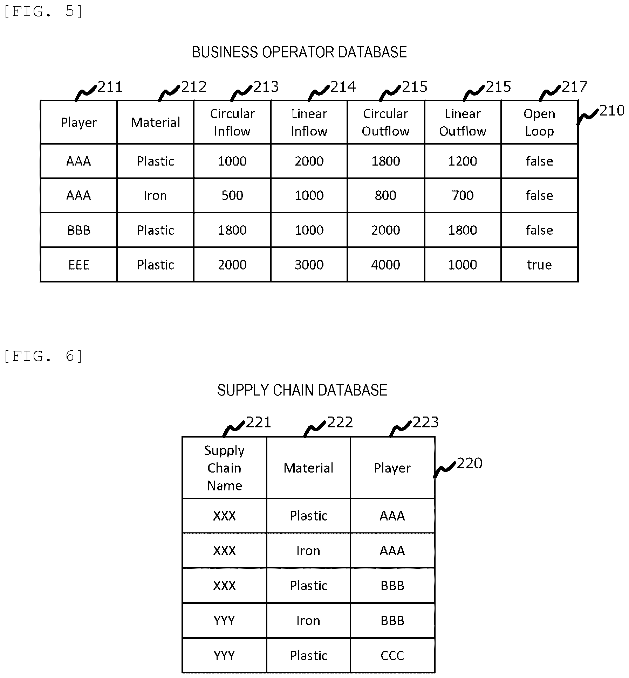

FIG. 5 is a diagram illustrating an example of the business operator database 210. The business operator database 210 includes data items of a player name 211 in which a name of the business operator is set, a resource name 212 in which a name or an identifier of a resource handled by the business operator is set, a circular inflow 213 in which an amount of a circular inflow of a resource procured to the business operator is set, a linear inflow 214 in which an amount of a linear inflow of the resource procured to the business operator is set, a circular outflow 215 in which an amount of a circular outflow of a resource discharged from the business operator is set, a linear outflow 216 in which an amount of a linear outflow of the resource discharged from the business operator is set, and an open loop 217 in which a parameter (Boolean value) indicating whether the business operator is an out-of-system business operator is set.

The business operator database 210 is used to, for example, create the drawing data of a connection figure 144 and a linear outflow figure 145 to be described later.

(Supply Chain Database)

FIG. 6 is a diagram illustrating an example of the supply chain database 220. The supply chain database 220 includes data items of a supply chain name 221 in which a name of a supply chain is set, a material 222 in which a name of a resource handled (circulated) in the supply chain is set, and a player 223 in which a name or an ID of a business operator who handles the resource is set.

The supply chain database 220 is used, for example, when drawing data of business operator figure 143 is created. Each record of the supply chain database 220 is added in an order of the registration of the business operators in the supply chain (that is, every time the supply chain save field 124 of the second input field 120 is designated by the user). For example, for a resource "Plastic", information is registered based on an input order (AAA → BBB → CCC) by the user. Instead of adding the records in the order of registration by the user, the resource circulation management apparatus 10 may receive, from the user, a designation of information of a number indicating an order of connection of the business operators in the supply chain.

(Short Circuit Flow Database)

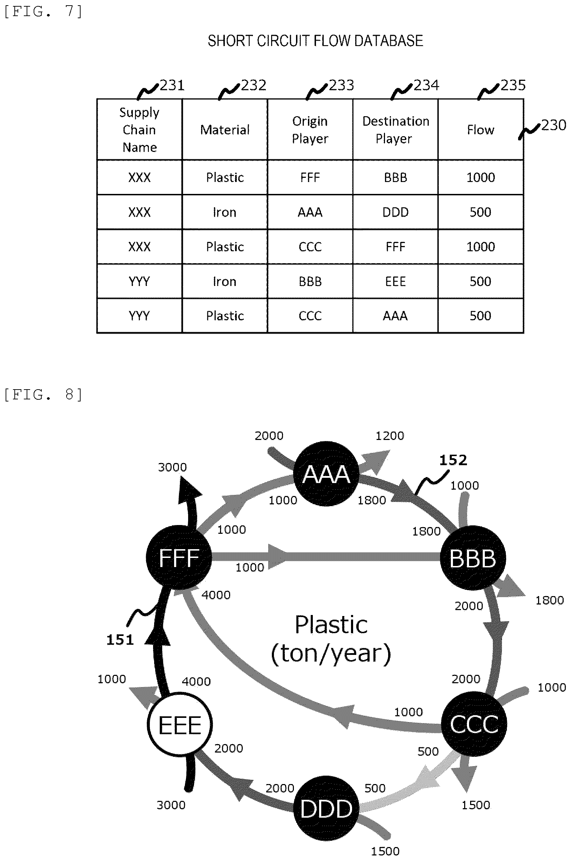

FIG. 7 is a diagram illustrating an example of the short circuit flow database 230. The short circuit flow database 230 has a record for each short circuit flow. Each record includes data items of a supply chain name 231 in which a name of a supply chain set with the short circuit flow is set, a material 232 in which a name of a resource related to the short circuit flow is set, a migration source player 233 in which a name or an identifier of a business operator as a migration source (discharge side) of the resource in the short circuit flow is set, a migration destination player 234 in which a name or an identifier of a business operator as a migration destination (reception side) of the resource in the short circuit flow is set, and a short circuit flow 235 in which a migration amount of the resource in the short circuit flow is set.

The short circuit flow database 230 is used, for example, when the drawing data of the short circuit flow figure 146 is created.

Next, the miss replenishment processing s13 will be described.

Miss Replenishment Processing

As illustrated in FIGS. 5 to 7, the record of the business operator of the business operator database 210 and the short circuit flow database 230 are associated with the record of another business operator. Then, the flow (circular outflow and linear outflow) of the resource from each business operator in the supply chain is also registered in the database in association with the business operator. Therefore, by verifying the consistency of the amount of the flow in such databases that express the network among the business operators, it is possible to check the consistency of the data related to the flow of the resource in the supply chain.

Therefore, the resource circulation management apparatus 10 according to the present embodiment detects a miss of the resource circulation data input to the resource circulation data management screen 100 in the input processing s11 and executes the miss replenishment processing s13 of adding information to the resource circulation data when the miss is detected. A specific example of the miss replenishment processing s13 will be described later.

Next, the drawing processing s15 will be described.

Drawing Processing

The resource circulation management apparatus 10 creates the drawing data based on the resource circulation data determined by the input processing s11 and the miss replenishment processing s13, and outputs a figure indicated by the drawing data to the resource circulation management apparatus 10, the business operator terminal 20, or the verifier terminal 30 based on the created drawing data.

Here, an example of the figure displayed based on the drawing data will be described using the resource circulation display field 140 of the resource circulation data management screen 100 in FIG. 4.

(Resource Circulation Display Field)

The resource circulation display field 140 illustrated in FIG. 4 is a display field that displays information about a circulation system drawn based on the data input in the first input field 110, the second input field 120, and the third input field 130. Specifically, the resource circulation display field 140 includes a supply chain name designation field 141 for receiving a designation of a supply chain to be drawn, a resource name designation field 142 for receiving a designation of a resource to be drawn in the supply chain, and a drawing area 150 of a circulation system of the resource specified by the supply chain name designation field 141 and the resource name designation field 142.

First, the resource circulation management apparatus 10 creates information (for example, a function or coordinate data representing a circle) representing a closed curve (here, a circle ring) representing the circulation system of the resource which can be drawn in the drawing area 150.

Then, a closed curve 148 is drawn near a center of the drawing area 150. On the closed curve 148, the business operator figures 143 (here, circles surrounding business operator names such as "AAA", "BBB", "CCC", ..., and "FFF") indicating the business operators implementing the circulation system input in the second input field 120 are arranged clockwise in an order of the flow of the resource (for example, in an order of a circular inflow of the resource to a certain business operator, a circular outflow of the resource from the business operator to a next business operator, a circular inflow of the resource to the next business operator, and a circular outflow of the resource from the next business operator to a further next business operator...).

Then, the connection figure 144 (here, an arc with an arrow) that forms a part of the closed curve 148 and connects two of the business operator figures 143 is drawn on the closed curve 148. A shape or a color of the connection figure 144 is a shape or a color according to an amount (or the number) (am amount (or the number) of the circular inflow or the circular outflow) of the resource flowing between the business operators indicated by the business operator figures 143. For example, a thickness of the connection figure 144 is drawn to increase as the amount of the resource increases. Alternatively, the color of the connection figure 144 is drawn with a color density according to the amount of the resource.

The closed curve 148, the business operator figures 143, and the connection figures 144 form a circulation figure representing the circulation of the resource.

In the business operator figure 143 on the closed curve 148, the linear outflow figure 145 indicating the linear outflow extending from the business operator figure 143 to an outside of the closed curve 148 is drawn. The linear outflow figure 145 is, for example, an arc-shaped arrow figure pointing to and indicating the outside of the closed curve 148. The arrow figure circumscribes the closed curve 148 at a position of the business operator figure 143. Similarly to the connection figure 144, the linear outflow figure 145 has a shape or a color according to the amount (or the number) of the flowing resource.

Similarly, in the business operator figure 143 on the closed curve 148, a linear inflow figure 149 indicating a linear inflow from the outside of the closed curve 148 to the business operator figure 143 is drawn. The linear inflow figure 149 is, for example, an arc-shaped arrow figure pointing to and indicating the business operator figure 143 from the outside of the closed curve 148. The arrow figure circumscribes the closed curve 148 at the position of the business operator figure 143. Similarly to the connection figure 144 described above, the linear inflow figure 149 has a shape or a color according to the amount (or the number) of the resource to be migrated.

Further, in the drawing area 150, a short circuit flow figure 146 is drawn, which connects the business operator figures 143 which are not adjacent to each other on the closed curve 148 (not directly connected by the connection figure 144) and which indicates the flow of the resource between the business operators. The short circuit flow figure 146 is, for example, a straight line or a curved line with an arrow. Similarly to the connection figure 144 described above, the short circuit flow figure 146 has a shape or a color according to the amount (or the number) of the resource to be migrated.

Near each of the connection figure 144, the linear outflow figure 145, and the short circuit flow figure 146 in the drawing area 150, an amount (or the number) of the resource corresponding to each figure is indicated by a numerical value.

What is drawn in the drawing area 150 in FIG. 4 is, in principle, a resource circulation in a closed system through a certain supply chain. The closed system is a system implemented by a flow of a resource in which, when attention is paid to a certain resource, the resource discharged by each business operator belonging to the supply chain is received by the next business operator in the supply chain, and there is no exchange of the resource with a business operator outside the supply chain. That is, the closed curve 148 (circle ring) in the drawing area 150 basically expresses the closed system.

On the other hand, there may be a system (open system) including a case in which a certain business operator once sends a reusable resource (or energy) to a business operator (which may be a market, a social stack, or the like) outside the supply chain or a case in which another business operator (next business operator) in the supply chain proves a reusable resource (or energy) from a business operator outside the supply chain.

In this way, when there is an external business operator not belonging to the supply chain (hereinafter, referred to as the out-of-supply-chain business operator), additional drawing is performed on the closed curve 148 (circle ring). That is, an external business operator figure 147 indicating the out-of-supply-chain business operator is drawn on the closed curve 148. In order to distinguish the external business operator figure 147 from the business operator figure 143, the external business operator figure 147 is drawn in a shape or a color different from that of the business operator figure 143 (however, it is preferable that the external business operator figure 147 has a shape or a color similar to that of the business operator figure 143). Whether the figure drawn on the closed curve 148 is the business operator figure 143 or the external business operator figure 147 is designated by the out-of-supply-chain check field 119 of the first input field 110.

A criterion for differentiating the shape or the color for distinguishing the external business operator figure 147 and the business operator figure 143 does not necessarily have to be the supply chain, and for example, the distinction may be based on grouping based on different criteria, such as distinguishing between predetermined affiliated companies and other companies.

In this way, the amount of the flow of the resource displayed in the drawing area 150 can be determined by the shape or the color of the figure.

Here, FIG. 8 illustrates an example in which the amount (or the number) of each flow is displayed in color density. For example, an arc of a circulation flow 151 whose amount of the flow is 4000 is drawn in a color darker than a color of an arc of a circulation flow 152 whose amount of the flow is 1800.

Next, a further specific example of drawing in the drawing area 150 will be described.

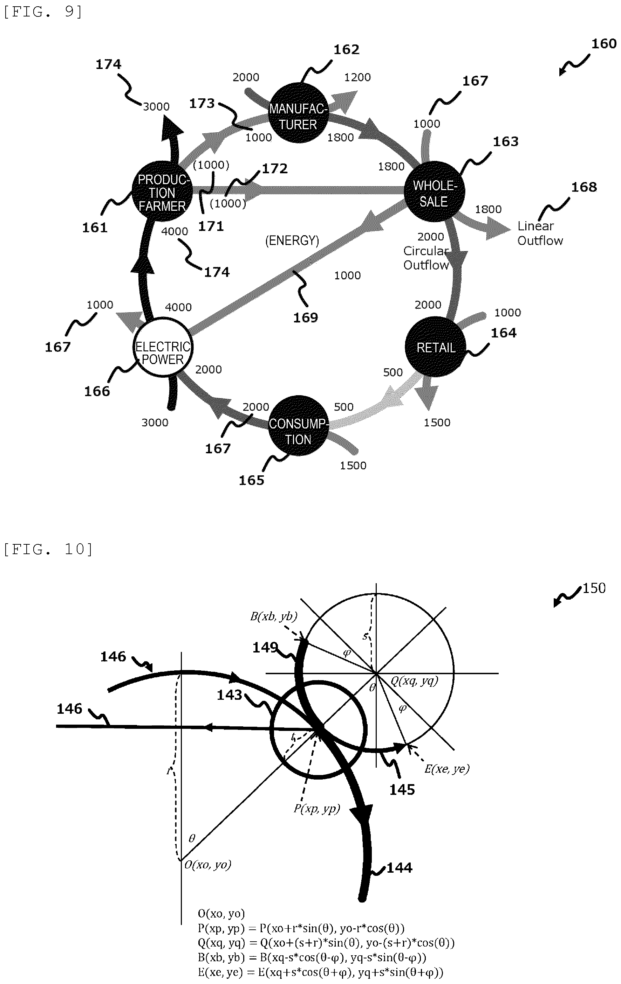

FIG. 9 is a diagram illustrating an example in which a supply chain (food supply chain) in a food field is drawn in the drawing area 150. In the drawing area 160, a production farmer 161, a manufacturer 162, a wholesaler 163, a retailer 164, a consumer 165, and an electric power business operator 166 are displayed as stakeholders (business operators) in the circulation system. The circular inflow, the linear inflow, the circular outflow, and the linear outflow of each of the stakeholders are displayed, and a flow amount 167 is quantitatively illustrated.

Here, the wholesaler 163 plays a role of purchasing processed food as a resource from the manufacturer 162 and delivering the purchased processed food to the retailer 164, and a waste is generated due to return loss or the like from a part of the processed food. An amount of the generated waste is counted as a linear outflow 168. Further, for example, a case is considered in which the wholesaler 163 has introduced an energy generation facility that reduces a volume of the waste and generates electricity in its own company. In this case, a circular outflow 169 of the waste from the wholesaler 163 to the electric power business operator 166 occurs. As a result of reducing the volume of the waste generated from the wholesaler 163, the linear outflow 168 decreases compared to the circular outflow 169.

Although the supply chain described in FIG. 9 is a food supply chain, the invention can also be applied to supply chains of other industries (for example, home appliances and industrial equipment). The invention is also applicable to other circulations such as a resource circulation of plastic.

The resource circulation display field 140 including the drawing area 150 described above does not need to display all data of each business operator, and at least a part of the data may be displayed only for a specific business operator (business operator terminal 20). Accordingly, even when the business operator holds highly confidential data on circulation resources, the data can be safely provided to the resource circulation management apparatus 10.

Further, the resource circulation display field 140 may be displayed only for a specific authentication institution or financial institution (verifier terminal 30) to evaluate or verify the circulation performance of the entire supply chain by a third party. In this case, it is conceivable that a configuration of a data trust portion of each database may be configured using blockchain technology or the like.

Next, details of drawing processing on a figure in the drawing processing s15 will be described.

The resource circulation management apparatus 10 can automatically create the drawing data based on the resource circulation data determined by the input processing s11 and the miss replenishment processing s13.

FIG. 10 is a diagram illustrating an example of the drawing processing on the business operator figure 143, the connection figure 144 in the closed curve 148, the linear outflow figure 145, and the short circuit flow figure 146. First, as a premise, the resource circulation management apparatus 10 sets a predetermined origin $(x, y) = (0, 0)$ in the drawing area 150, and sets an X-Y coordinate system in which the right side of the paper surface (screen) is set as an X-axis positive direction and the upper side of the paper surface (screen) is set as a Y-axis positive direction. Further, based on size and layout constraints of the drawing area 150 (for example, display positions of the supply chain name designation field 141 and resource name designation field 142), the resource circulation management apparatus 10 sets center coordinates O $(x_o, Y_O)$ and a radius r of the circle ring of the closed curve 148 representing the supply chain, a display size t of the name of the business operator in the business operator figure 143, and a curvature radius s of an arc of the linear outflow figure 145 circumscribing the business operator figure 143 (the same applies to the linear inflow figure 149).

First, the resource circulation management apparatus 10 draws an arc of a predetermined angle having the radius r centered on the center coordinates O $(x_o, y_o)$ with respect to the connection figure 144 in the closed curve 148. The resource circulation management apparatus 10 sets a thickness F (indicating the amount of the flow) of the connection figure 144 to F/M * D when a maximum value of the flow (may be a maximum value for each type of the flow or a maximum value for all types of the flows) among all the connection figures 144 is M and a maximum value of a thickness among all the connection figures 144 is D. When the amount of the flow is indicated by the color density, the same calculation may be performed based on a numerical value or a number indicating the color density or a color tone.

The resource circulation management apparatus 10 draws an arc having a radius t centered on $P(x_p, y_p) = P(x_o + r * \sin(\theta), y_o - r * \cos(\theta))$ with respect to the business operator figure 143 of a certain business operator. When the number of all business operators in the supply chain is N and an order of appearance of a certain business operator in the supply chain is n, $\theta = 2 * \pi * n/N$ relating to the business operator.

With respect to the linear inflow figure 149 of a certain business operator, the resource circulation management apparatus 10 draws an arc in which a position of a start point is $B(x_b, y_b) = B(x_q - s * \cos(\theta - \varphi), y_q - s * \sin(\theta - \varphi))$ and a position of an end point is $P(x_p, y_p)$ when a position of a center of the arc is $Q(x_q, y_q) = Q(x_o + (s + r) * \sin(\theta), y_o - (s + r) * \cos(\theta))$.

Similarly, with respect to the linear outflow figure 145 of a certain business operator, the resource circulation management apparatus 10 draws an arc in which a position of a start point is $P(x_p, y_p)$ and a position of an end point is $E(x_q + s * \cos(\theta + \varphi), y_q + s * \sin(\theta + \varphi))$ when a position of a center of the arc is $Q(x_q, y_q) = Q(x_o + (s + r) * \sin(\theta), y_o - (s + r) * \cos(\theta))$.

$\varphi$ is a parameter of an angle for adjusting a length of the arc.

With respect to the short circuit flow figure 146 of a certain business operator, the resource circulation management apparatus 10 sets a position of a start point (the business operator of the migration source of the resource) to $P(x_p, y_p) = P(x_o + r * \sin(\theta), y_o - r * \cos(\theta))$, sets a position of an end point (the business operator of the migration destination of the resource) to $P'(x_p', y_p') = P(x_o + r * \sin(\theta'), y_o - r * \cos(\theta'))$, and draws a straight line that combines the start point and the end point. Here, $\theta$ and $\theta'$ are angles for defining display positions of business operators of the migration source and the migration destination, respectively, and when an order in which the business operators appear on the closed curve 148 is n and n', $\theta = 2 * \pi * n/N$ and $\theta' = 2 * \pi * n'/N$.

In this way, the resource circulation display field 140 allows the user to intuitively understand the flow of quantitative resource circulation throughout the entire supply chain. By using such an interface, it is possible to evaluate not only the circulation performance of each individual business operator but also the circulation performance of the entire supply chain. Such an evaluation index of the circulation performance is represented by, for example, the following formula.

$$CE_{rate} = \frac{\sum_{i=1}^{N} CO_i}{\sum_{i=1}^{N} LO_i}$$

$CO_i$ represents a circular outflow of a business operator i, and $Lo_i$ represents a linear outflow of the business operator i. $CE_{rate}$ is an evaluation index representing a ratio of the circular outflow in the entire system and is a ratio of a sum of the circular outflows to a sum of the linear outflows. Based on the index, the efficiency of the circular outflow in the entire supply chain can be evaluated.

The evaluation index of the circulation performance can also be expressed by the following formula.

$$CE_{value} = \frac{\sum_{i=1}^{N} VL_i}{\sum_{i=1}^{N} LO_i}$$

$VLi$ indicates a value created by the business operator i. This value includes not only a general economic value such as profits but also a value obtained by converting an environmental value or a social value into an economic value. As a method of calculating $VL_i$, various methods of quantitatively evaluating a non-financial index are used in addition to a method of using profit data added to a financial table. $CE_{value}$ is a ratio of a value created for a linear inflow (input resource) newly input to the entire supply chain, that is, an index indicating the efficiency. By using $CE_{value}$, business activities having more value with fewer resources can be evaluated from a viewpoint of circulation efficiency (circularity) of the entire supply chain.

Such an evaluation index is displayed, for example, in the evaluation index display field 180 of the resource circulation data management screen 100. Each user can quantitatively evaluate the circulation of the entire supply chain by referring to the displayed evaluation index. In addition, as in the case of the food field described above, when the resource circulation by a specific stakeholder is changed due to an equipment introduction or the like, it is possible to quantitatively and intuitively grasp a change in circulation efficiency in the entire circulation system.

The resource circulation management apparatus 10 may control each device provided in each business operator based on information displayed in the resource circulation display field 140 or the evaluation index display field 180. For example, the resource circulation management apparatus 10 transmits, to a predetermined device (for example, a manufacturing device, a discharge device, or a power generation device of the resource) managed by each business operator, a control signal for instructing consumption or for generating a resource for correcting the balance of each flow displayed in the resource circulation display field 140. The predetermined device performs corresponding control based on the control signal received from the resource circulation management apparatus 10 and performs an operation, stop, change in operation speed, or the like of the device.

Specific Example of Miss Replenishment Processing

Next, a specific example of the miss replenishment processing s13 will be described.

The resource circulation management apparatus 10 inspects the contents of each database and determines whether there is a miss or a contradiction in flow rate data in the amount of the migration of the resource between the in-system business operators (the amounts of the circular inflow, the circular outflow, and the short circuit flow) or the amount of the migration of the resource between the in-system business operator and the out-of-system business operator (the amounts of the linear inflow and the linear outflow).

When the resource circulation management apparatus 10 determines that there is a miss or a contradiction, the resource circulation management apparatus 10 sets information (specifically, registers the information in each database) on the flow amount of the resource calculated based on the data of the flow having no miss or contradiction in each database to a flow of the missing or inconsistent portion.

Here, a specific example of the miss replenishment processing s13 will be described using the case of a resource circulation display field 240 illustrated in FIG. 9 as an example.

In FIG. 9, it is assumed that a circular outflow 171 and a short circuit flow 172 for the production farmer 161 as the business operator (business operator figure 143) displayed in the resource circulation display field 240 are missing. Specifically, the resource circulation management apparatus 10 refers to each record of the business operator database 210 and detects a miss of the circular outflow 215 of the record related to the production farmer 161. In addition, the resource circulation management apparatus 10 refers to each record of the short circuit flow database 230 and detects a miss of the short circuit flow 235 of the record related to the production farmer 161.

Then, the resource circulation management apparatus 10 acquires, in the resource circulation display field 240, a circular inflow 173 of the manufacturer 162 associated with the production farmer 161 and each flow of the wholesaler 163 associated with the production farmer 161. Specifically, the resource circulation management apparatus 10 acquires the circular inflow 213 of the record related to the manufacturer 162 of the business operator database 210 and content of each flow of the record related to the wholesaler 163 of the short circuit flow database 230.

Then, the resource circulation management apparatus 10 sets the circular inflow 173 of the manufacturer 162 to the missing portion of the circular outflow 171 and sets a value of the inflow calculated from each flow of the wholesaler 163 to the missing portion of the short circuit flow 172. Specifically, the resource circulation management apparatus 10 sets a value of the acquired circular inflow 213 to the circular outflow 215 of the record of the production farmer 161 of the business operator database 210. The resource circulation management apparatus 10 subtracts all the inflows from all the outflows (excluding the short circuit flow) based on each acquired flow of the record related to the wholesaler 163 of the short circuit flow database 230 and sets a value obtained by the subtraction to the short circuit flow 235 of the record related to the production farmer 161 of the short circuit flow database 230.

In this way, even when the data of the flow of the business operator on the supply chain is partially missing, the missing data can be estimated with high accuracy by utilizing a structure of the database in which the relationship between the business operators connected through the network is defined.

Here, the case in which the resource circulation management apparatus 10 detects missing data has been described, but even when there is no missing data, the consistency of the data set in each database may be evaluated and verified, and a place where unauthorized input or erroneous input of data may be estimated and a warning may be displayed.

Modifications

Hereinafter, modifications of the figure drawn in the drawing area 150 illustrated in FIG. 4 and the like will be described.

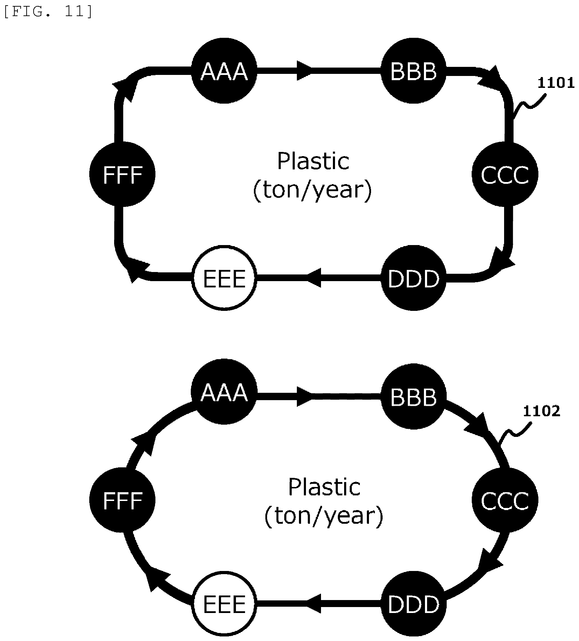

FIG. 11 is a diagram illustrating another example of a closed curve representing a circulation system of the resource. As illustrated in the same figure, the closed curve may be a rectangle 1101 or an ellipse 1102.

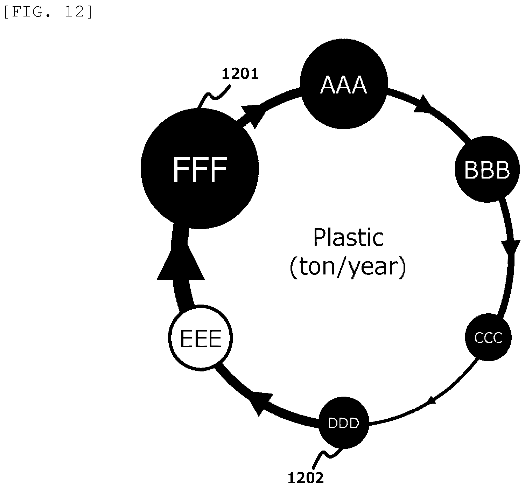

Next, FIG. 12 is a diagram illustrating another example of the business operator figure. As illustrated in the same figure, the business operator figures may not have the same shape or magnitude for all business operators. That is, shapes or magnitudes of the business operator figures 1201 and 1202 may be changed according to the amount (for example, the total amount of the resource received by the business operator and the resource discharged by the business operator) of the resource related to the business operator. Accordingly, the user can easily and visually confirm which business operator handles more resources. The business operator figure may be changed in color instead of the shape or magnitude.

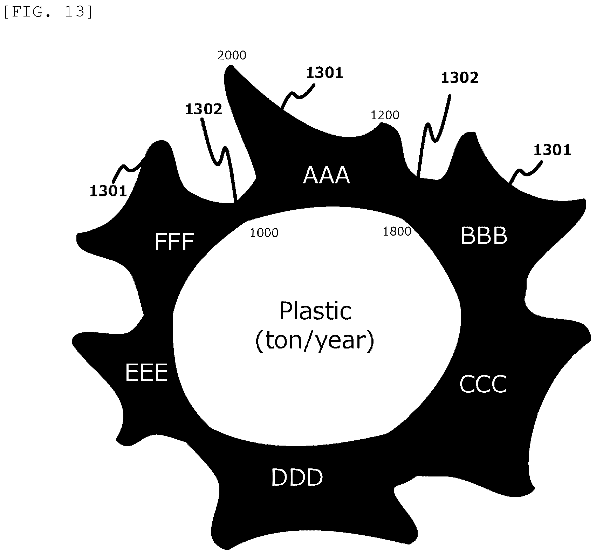

Next, FIG. 13 is a diagram illustrating another example of the connection figure that connects business operator figures. As illustrated in the same figure, the connection figure may be a boundary portion 1302 by bringing business operator figures 1301 into direct contact with one another. The length of the boundary portion 1302 may represent the amount of the resource exchanged among the business operators. That is, the connection figure may be a line segment instead of an area. In addition, a shape and a color of the business operator figure may be free except for the restriction of the length of the boundary portion 1302. In the example of the same figure, since a flow of the resource between a business operator FFF and a business operator AAA is 1000 and a flow of the resource between the business operator AAA and a business operator BBB is 1800, a thickness of a portion at which a business operator figure of the business operator FFF and a business operator figure of the business operator AAA are in contact with each other is thinner than a thickness of a portion at which a business operator figure of the business operator BBB and the business operator figure of the business operator AAA are in contact with each other.

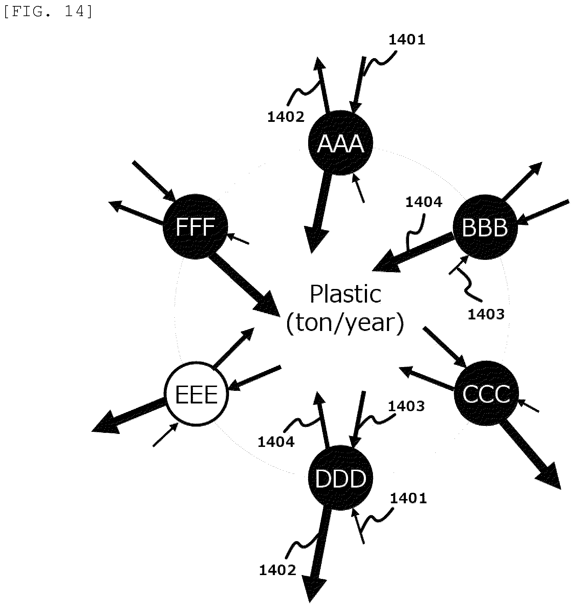

Next, FIG. 14 is a diagram illustrating another example of a figure indicating a flow of a resource among business operators. That is, another drawing method may be adopted in which the closed curve and the connection figure indicating the flow of the resource among the business operators are not drawn and the flow of the resource among the business operators can be determined. In the example of the same figure, arrows 1401 and 1402 disposed on a side of each business operator indicate a linear inflow and a linear outflow, respectively, and a thickness, a color density, or a length of the arrows 1401 and 1402 is set according to the amount of the flow. In contrast, arrows 1403 and 1404 disposed on an inner side of each business operator indicate a circular inflow or a circular outflow, and a thickness, a color density, or a length of the arrows 1403 and 1404 is set according to the amount of the flow. The respective arrows 1401, 1402, 1403, and 1404 are distinguished between inflows and outflows depending on directions thereof (for example, the arrow is an inflow when being directed inward, and the arrow is an outflow when being directed outward).

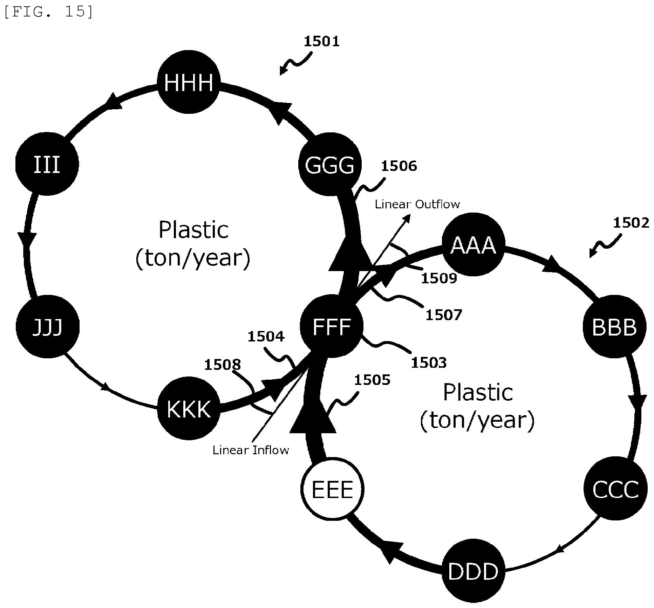

FIG. 15 is a diagram illustrating another configuration example of the circulation figure. As illustrated in the same figure, circulation figures of a plurality of different supply chains having a predetermined business operator in common may be drawn in the drawing area. In the example of the same drawing, a first circulation figure 1501 representing a first supply chain and a second circulation figure 1502 representing a second supply chain are drawn. A business operator figure 1503 related to the business operator FFF common to both the first circulation figure 1501 and the second circulation figure 1502 is drawn.

The business operator figure 1503 is drawn at a position (in the same figure, a common point at which two circle rings are in contact with each other) common to the first circulation figure 1501 and the second circulation figure 1502. That is, to the business operator figure 1503, a connection figure 1504 (circular inflow) related to the first circulation figure 1501, a connection figure 1505 (circular inflow) related to the second circulation figure 1502, a connection figure 1506 (circular outflow) related to the first circulation figure 1501, a connection figure 1507 (circular outflow) related to the second circulation figure 1502, a linear inflow figure 1508 from an outside, and a linear outflow figure 1509 to the outside are connected. By drawing the two circulation figures in this way, it is possible to express that the business operator is incorporated into two resource circulations, and the resource used in one resource circulation is also used in another resource circulation.

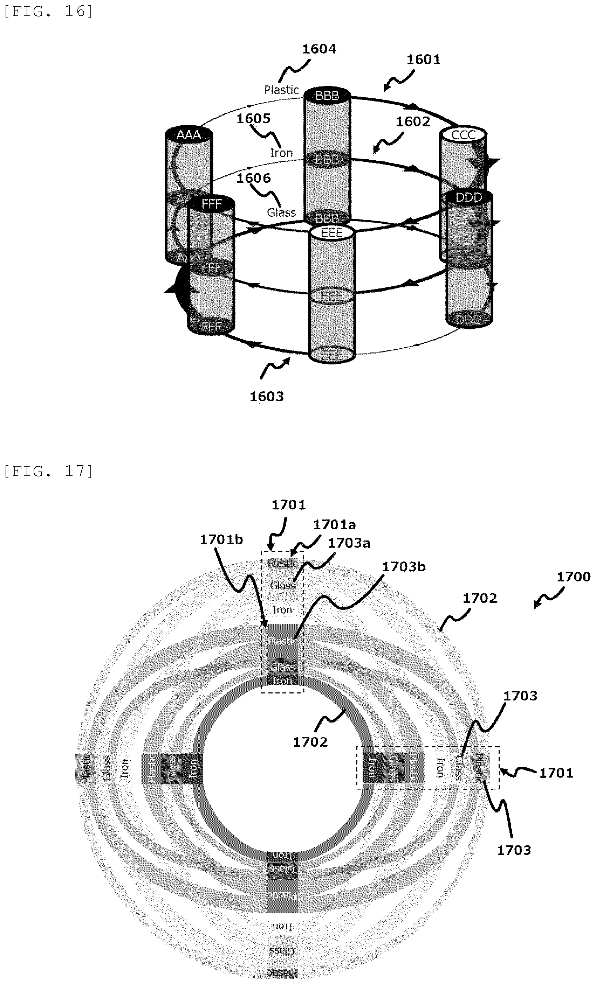

FIG. 16 is a diagram illustrating another configuration example of the circulation figure. In the same figure, circulation figures (closed curves) related to a plurality of types of resources are drawn three-dimensionally in layers. Specifically, an upper circle ring 1601 indicating a circulation of "Plastic", a middle circle ring 1602 indicating a circulation of "Iron", and a lower circle ring 1603 indicating a circulation of "Glass" are drawn.

Positions of business operator figures of the same business operator in a business operator figure 1604 of each business operator on the upper circle ring 1601, the business operator figure 1605 of each business operator on the middle circle ring 1602, and the business operator figure 1606 of each business operator on the lower circle ring 1603 are aligned in an up-down direction (plane coordinates are the same). Then, a figure (here, a cylinder) including the business operator figures of the same business operator is further drawn.

FIG. 17 is a diagram illustrating another example of the circulation figure. This circulation figure is a Sankey diagram 1700. The Sankey diagram is a chart expressing flow rates between steps. A Sankey diagram includes "lines" (for example, represented by straight lines or curved lines), which are figures indicating a flow of a certain object and "plots" (for example, represented by rectangles), which are figures indicating a migration source or a migration destination of the object, and the flow of the object is represented by combining the plots by the lines.

The Sankey diagram 1700 illustrated in FIG. 17 includes a plurality of plot figures 1701 corresponding to the business operator figures 143 and a plurality of line figures 1702 corresponding to the connection figures 144. The plot figure 1701 is a rectangle, and the line figure 1702 is an arc or an elliptical arc. By connecting the plurality of line figures 1702 via the plot figures 1701, the line figures 1702 forms a circle-ring-shaped figure (that is, a closed curve) as a whole. In addition, each plot figure 1701 is drawn in a rectangular shape in which a direction extending from an inside (center) of the circle ring toward an outside is a long axis direction. Each plot figure 1701 is disposed at a position on a predetermined closed curve and is drawn from the center side to the outside of the circle ring in each direction (the direction of 12 o'clock, the direction of 3 o'clock, the direction of 6 o'clock, and the direction of 9 o'clock in FIG. 17).

The plot figure 1701 includes a rectangular plot figure 1701b on an inside (Plasma, Glass, and Iron on the inside) and a rectangular plot figure 1701a on an outside (Plastic, Glass, and Iron on the outside). The plot figure 1701a on the outside represents a migration source or a migration destination of each resource related to the linear flow. The plot figure 1701b on the inside represents a migration source or a migration destination of each resource related to the circular flow. Each of the plot figures 1701a and 1701b is formed by stacking block figures 1703a and 1703b indicating each resource.

The line figure 1702 is a curved line or a straight line connecting a block figure 1703 in a certain plot figure 1701 and a block figure 1703 in another plot figure 1701, and exists for each resource. A shape (thickness or the like) or a color of the line figure 1702 may be a shape or a color according to the amount (or the number) of the flow of the resource indicated by the line figure 1702.

As described above, the resource circulation management apparatus 10 according to the present embodiment generates, in the drawing area 150 of an output device (output device of any of the resource circulation management apparatus 10, the business operator terminal 20, and the verifier terminal 30), drawing data for (1) outputting the business operator figure 143 at a predetermined position on the closed curve 148 indicating the circulation system of the resource, (2) outputting the connection figure 144 to the drawing area 150 as a figure indicating the flow of the resource, (3) setting the shape or the color of the connection figure 144 to be a shape or a color according to the flow rate, (4) outputting, as a figure indicating a flow of the resource between the business operator and a business operator out of the circulation system of the resource, a figure whose start point or end point is a position of the business operator figure of the business operator to the drawing area 150, and (5) setting the shape or the color of the figure to a shape or a color reflecting the flow rate of the resource.

In this way, the resource circulation management apparatus 10 according to the present embodiment creates data for drawing not only information (flow and amount of the resource) about a business operator directly related to the circulation system of the resource but also information (flow and amount of the resource) about a business operator outside the circulation system. By using such drawing data, a resource circulation having a complicated configuration can be expressed. For example, it is possible to visually provide environmental and economic information related to the resource circulation in an easy-to-understand manner.

When there are two routes of resource circulation, the resource circulation management apparatus 10 according to the present embodiment creates the drawing data for outputting, to the drawing area, a figure (that is, the connection figure 144) that connects the business operator figures 143 in a first circulation along the closed curve 148 and for outputting, to the drawing area, a figure that directly connects the business operator figures 143 (that is, the short circuit flow figure 146) in a second circulation as a figure that indicates the flow of the resource between predetermined business operators which is exchanged by skipping a part of the business operators.

Accordingly, even in a complicated case in which the resource circulations by a plurality of routes exist, the resource circulations can be correctly drawn.

The resource circulation management apparatus 10 according to the present embodiment creates the drawing data for differentiating the shape or the color of the business operator figure of the business operator belonging to the predetermined supply chain from the shape or the color of the business operator figure of the business operator not belonging to the supply chain among the plurality of business operators in the resource circulation system.

Accordingly, the user can easily grasp that the resource circulation system is an open system in which the business operator in the supply chain and the business operator in the supply chain coexist.

The resource circulation management apparatus 10 according to the present embodiment outputs the content indicated by the created drawing data to the output device 413. Accordingly, the user can easily and visually recognize the resource circulation having a complicated configuration.

The resource circulation management apparatus 10 according to the present embodiment outputs an evaluation index that is calculated based on the resource circulation data and indicates the efficiency of the resource circulation.

Accordingly, the user can, for example, make a plan or change in business regarding the resource circulation.

The resource circulation management apparatus 10 according to the present embodiment receives an input of the resource circulation data (information about the business operator, information about the flow rate of the resource, information about the out-of-system business operator, information about the flow rate of the resource between the (in-system) business operator and the out-of-system business operator, and the like) via the input device 411. Accordingly, the user can easily set the information about each business operator.

When it is determined that there is a miss or a contradiction of information in the migration amount of the resource between the in-system business operators or the migration amount of the resource between the in-system business operator and the out-of-system business operator in the resource circulation data, the resource circulation management apparatus 10 according to the present embodiment sets the information about the migration amount of the resource calculated based on the resource circulation data of the portion having no miss or contradiction to the information about the amount of the migration having the miss or contradiction.

Accordingly, even when the received resource circulation data is defective, the resource circulation management apparatus 10 can correct the contents thereof and output the information having correct contents.

The resource circulation management apparatus 10 according to the present embodiment creates the drawing data for outputting a circle, an ellipse, or a rectangle as a closed curve indicating the resource circulation, thereby enabling the user to more intuitively grasp the resource circulation.

The resource circulation management apparatus 10 according to the present embodiment creates the drawing data for setting the shape or the color of the business operator figure 143 at a predetermined position on the closed curve 148 according to the amount of the resource sent by the business operator or accepted by the business operator.

In this way, by reflecting the amount of the corresponding resource in the shape (for example, the magnitude) or the color of the business operator figure 143, it is possible to express the importance of the resource circulation of each business operator.

The resource circulation management apparatus 10 according to the present embodiment brings the business operator figures 143 into contact with each other and creates the drawing data for setting a length of a contact portion thereof to a length according to the flow rate of the resource.

Accordingly, it is possible to simply express the magnitude of the flow rate of the resource between the business operators.

The resource circulation management apparatus 10 according to the present embodiment draws the closed curves 148 of two of the resource circulations and creates the drawing data for making the drawing positions of the business operator figure 143 of the business operator related to both of the two closed curves 148 the same.

Accordingly, it is possible to easily express that the business operator is incorporated into two resource circulations, and the resource used in one resource circulation is also used in another resource circulation.

The resource circulation management apparatus 10 according to the present embodiment draws a layer formed by the closed curve of each resource circulation and creates the drawing data in which the business operators in each layer are aligned.

Accordingly, it is possible to draw each resource circulation while clarifying a correspondence relationship among the plurality of types of resource circulations.

The resource circulation management apparatus 10 according to the present embodiment creates the drawing data of a Sankey diagram for outputting the business operator figure as a plot onto a closed curve of a drawing area and outputting a curve connecting the business operator figures as a line to the drawing area.

Accordingly, it is possible to express the flow rate of the resource in the resource circulation among the business operators in an easy-to-understand manner.

The resource circulation management system 1 according to the present embodiment includes the business operator terminal 20 which receives an input of the resource circulation data via an input device, the resource circulation management apparatus 10 which creates the drawing data, and the verifier terminal which outputs content indicated by the created drawing data to an output device.

Accordingly, each business operator can input their own information, and a verifier such as an authentication institution can examine and authenticate the resource circulation of the business operator. For example, a financial institution can consider providing loans to business operators depending on the degree of resource circulation.

The invention is not limited to the above embodiment and can be implemented using any components without departing from the gist of the invention. The embodiment and modifications described above are merely examples, and the invention is not limited to the contents thereof as long as the characteristics of the invention are not impaired. Although various embodiments and modifications have been described above, the invention is not limited to the contents thereof. Other aspects conceivable within the scope of a technical idea of the invention are also included within the scope of the invention.

For example, the configuration of each functional unit described in the present embodiment is an example, and for example, a part of the functional units may be incorporated into another functional unit, or a plurality of functional units may be implemented as one functional unit.

In the present embodiment, the resource circulation management apparatus 10 acquires the resource circulation data through data input to the resource circulation data management screen 100, and may automatically acquire the resource circulation data from a predetermined database or a device such as a sensor provided at each business operator in the supply chain.

A part or all of the input of the resource circulation data may be performed by the resource circulation management apparatus 10 instead of the business operator terminal 20.

The miss replenishment processing s13 may be performed after the drawing processing s15.

Reference Signs List

1: resource circulation management system
10: resource circulation management apparatus
20: business operator terminal
30: verifier terminal

**Claims**

1. A resource circulation management apparatus comprising:

a storage device configured to store resource circulation data including information about a plurality of business operators in a circulation of a resource that is performed by the plurality of business operators, information about an amount of the resource circulated by the plurality of business operators, information about another business operator other than the plurality of business operators, and information about a migration of the resource between the business operator and the other business operator; and
a processing device configured to

create, based on the information about the plurality of business operators, information about a closed curve indicating the circulation of the resource for an output area in a predetermined output device, and
create, based on the resource circulation data, drawing data for

outputting a business operator figure indicating the business operator to a predetermined position on the closed curve in the output area,
outputting, to the output area, a connection figure that connects a business operator figure indicating a first one of the business operator and a business operator figure indicating a second one of the business operator as a figure indicating a flow of the resource from the first business operator to the second business operator and setting a shape or a color of the connection figure to a shape or a color reflecting a flow rate of the resource, and
outputting, to the output area, a figure whose start point or end point is a position of the business operator figure of the business operator as a figure indicating a flow of the resource between the business operator and the other business operator and setting a shape or a color of the figure to a shape or a color reflecting the flow rate of the resource.

2. The resource circulation management apparatus according to claim 1, wherein

the circulation of the resource includes a first circulation implemented by all the plurality of business operators and a second circulation implemented by business operators excluding a part of the plurality of business operators, and
the processing device creates the drawing data for

outputting, as a figure indicating a flow of the resource between the first business operator and the second business operator in the first circulation, a figure that connects the figure indicating the first business operator and the figure indicating the second business operator along the closed curve to the output area, and

outputting, as a figure indicating a flow of the resource between predetermined business operators skipping the part of the business operators in the second circulation, a figure that directly connects the figure indicating the first business operator and the figure indicating the second business operator to the output area.

3. The resource circulation management apparatus according to claim 1, wherein

the processing device creates the drawing data for differentiating a shape or a color of the business operator figure of the business operator belonging to a predetermined group among the plurality of business operators from a shape or a color of the business operator figure of the business operator not belonging to the predetermined group.

4. The resource circulation management apparatus according to claim 1, further comprising an output device configured to output content indicated by the created drawing data.

5. The resource circulation management apparatus according to claim 1, further comprising an output device configured to output an index that indicates efficiency of the circulation of the resource and that is calculated based on the resource circulation data.

6. The resource circulation management apparatus according to claim 1, further comprising an input device configured to receive an input of the resource circulation data.

7. The resource circulation management apparatus according to claim 1, wherein

the storage device stores information about an amount of the resource sent by the business operator or the other business operator and information about an amount of the resource received by the business operator or the other business operator as the information about the amount of the resource circulated by the plurality of business operators and information about an amount of the migration of the resource between the business operator and the other business operator in the resource circulation data, and the processing device determines whether there is a miss or a contradiction of information in either information about an amount of a migration of the resource between the business operators or the information about the amount of the migration of the resource between the business operator and the other business operator in the resource circulation data, and sets information about an amount of a flow of the resource calculated based on the resource circulation data in which there is no miss or contradiction to be the information about the amount of the migration of the resource determined to have a miss or a contradiction of the information when it is determined that there is a miss or a contradiction of the information.

8. The resource circulation management apparatus according to claim 1, wherein the processing device creates the drawing data for outputting a circle, an ellipse, or a rectangle as the closed curve indicating the circulation of the resource.

9. The resource circulation management apparatus according to claim 1, wherein the processing device creates the drawing data in which a shape or a color of the figure indicating the business operator at the predetermined position is set according to an amount of the resource related to the business operator.

10. The resource circulation management apparatus according to claim 1, wherein the processing device creates the drawing data for bringing the figure indicating the first business operator and the figure indicating the second business operator into contact with each other and setting a length of a contact portion thereof to be a length corresponding to the flow rate of the resource.

11. The resource circulation management apparatus according to claim 1, wherein

the storage device stores information about the business operator for a first resource circulation and information about the business operator for a second resource circulation, and the processing device creates the drawing data for making drawing positions of figures indicating business operators related to both the first resource circulation and the second resource circulation in the output area the same.

12. The resource circulation management apparatus according to claim 1, wherein

the storage device stores information about the business operator in a circulation of a first resource and information about the business operator in a circulation of a second resource, and the processing device draws a layer formed by a closed curve indicating the circulation of the first resource and a layer formed by a closed curve indicating the circulation of the second resource, and creates the drawing data in which an output position of a business operator figure of each of the business operators in the layer related to the circulation of the first resource and an output position of a business operator figure of each of the business operators in the layer related to the circulation of the second resource are aligned.

13. The resource circulation management apparatus according to claim 1, wherein the processing device creates the drawing data of a Sankey diagram for outputting the business operator figure to the closed curve of the output area as a plot and outputting a curve indicating a migration of the resource between the business operators and connecting the business operator figures as a line to the output area.

14. A resource circulation management method comprising:
    executing, by an information processing apparatus,

    processing of storing resource circulation data including information about a plurality of business operators in a circulation of a resource that is performed by the plurality of business operators, information about an amount of the resource circulated by the plurality of business operators, information about another business operator other than the plurality of business operators, and information about a migration of the resource between the business operator and the other business operator,
    creating, based on the information about the plurality of business operators, information about a closed curve indicating the circulation of the resource for an output area in a predetermined output device, and
    creating, based on the resource circulation data, drawing data for

        outputting a business operator figure indicating the business operator to a predetermined position on the closed curve in the output area,
        outputting, to the output area, a connection figure that connects a business operator figure indicating a first one of the business operator and a business operator figure indicating a second one of the business operator as a figure indicating a flow of the resource from the first business operator to the second business operator and setting a shape or a color of the connection figure to a shape or a color reflecting a flow rate of the resource, and
outputting, to the output area, a figure whose start point or end point is a position of the business operator figure indicating the business operator as a figure indicating a flow of the resource between the business operator and the other business operator and setting a shape or a color of the figure to a shape or a color reflecting the flow rate of the resource.

15. A resource circulation management system comprising:

    a first information processing apparatus configured to receive, via an input device, an input of resource circulation data including information about a plurality of business operators in a circulation of a resource that is performed by the plurality of business operators, information about an amount of the resource circulated by the plurality of business operators, information about another business operator other than the plurality of business operators, and information about a migration of the resource between the business operator and the other business operator;
    a resource circulation management apparatus including

        a storage device configured to store the received resource circulation data, and
        a processing device configured to

            create, based on the information about the plurality of business operators, information about a closed curve indicating the circulation of the resource for an output area in a predetermined output device, and
            create, based on the resource circulation data, drawing data for

                outputting a business operator figure indicating the business operator to a predetermined position on the closed curve in the output area,
                outputting, to the output area, a connection figure that connects a business operator figure indicating a first one of the business operator and a business operator figure indicating a second one of the business operator as a figure indicating a flow of the resource from the first business operator to the second business operator and setting a shape or a color of the connection figure to a shape or a color reflecting a flow rate of the resource, and outputting, to the output area, a figure whose start point or end point is a position of a business operator figure of the business operator as a figure indicating a flow of the resource between the business operator and the other business operator and setting a shape or a color of the figure to a shape or a color reflecting the flow rate of the resource; and

a second information processing apparatus configured to output content indicated by the created drawing data to an output device.

[FIG. 1]

EP 4 502 915 A1

[FIG. 2]

[FIG. 3]

[FIG. 4]

EP 4 502 915 A1

[FIG. 5]

BUSINESS OPERATOR DATABASE

| Player | Material | Circular Inflow | Linear Inflow | Circular Outflow | Linear Outflow | Open Loop |
|--------|----------|-----------------|---------------|------------------|----------------|-----------|
| AAA | Plastic | 1000 | 2000 | 1800 | 1200 | false |
| AAA | Iron | 500 | 1000 | 800 | 700 | false |
| BBB | Plastic | 1800 | 1000 | 2000 | 1800 | false |
| EEE | Plastic | 2000 | 3000 | 4000 | 1000 | true |

[FIG. 6]

SUPPLY CHAIN DATABASE

| Supply Chain Name | Material | Player |
|-------------------|----------|--------|
| XXX | Plastic | AAA |
| XXX | Iron | AAA |
| XXX | Plastic | BBB |
| YYY | Iron | BBB |
| YYY | Plastic | CCC |

[FIG. 7]

SHORT CIRCUIT FLOW DATABASE

| Supply Chain Name | Material | Origin Player | Destination Player | Flow |
|---|---|---|---|---|
| XXX | Plastic | FFF | BBB | 1000 |
| XXX | Iron | AAA | DDD | 500 |
| XXX | Plastic | CCC | FFF | 1000 |
| YYY | Iron | BBB | EEE | 500 |
| YYY | Plastic | CCC | AAA | 500 |

[FIG. 8]

[FIG. 9]

[FIG. 10]

O(xo, yo)
P(xp, yp) = P(xo+r*sin(θ), yo-r*cos(θ))
Q(xq, yq) = Q(xo+(s+r)*sin(θ), yo-(s+r)*cos(θ))
B(xb, yb) = B(xq-s*cos(θ-φ), yq-s*sin(θ-φ))
E(xe, ye) = E(xq+s*cos(θ+φ), yq+s*sin(θ+φ))

[FIG. 11]

1101

Plastic
(ton/year)

1102

Plastic
(ton/year)

[FIG. 12]

[FIG. 13]

[FIG. 14]

[FIG. 15]

[FIG. 16]

[FIG. 17]

## INTERNATIONAL SEARCH REPORT

International application No.

**PCT/JP2022/014814**

### A. CLASSIFICATION OF SUBJECT MATTER

***G06Q 50/10*** (2012.01)i
FI: G06Q50/10

According to International Patent Classification (IPC) or to both national classification and IPC

### B. FIELDS SEARCHED

Minimum documentation searched (classification system followed by classification symbols)

G06Q50/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2021-086431 A (SAHO, Midori) 03 June 2021 (2021-06-03)<br>entire text, all drawings | 1-15 |
| A | JP 2021-166499 A (SEKISUI CHEMICAL CO LTD) 21 October 2021 (2021-10-21)<br>entire text, all drawings | 1-15 |
| A | JP 2018-106557 A (YAHOO JAPAN CORP) 05 July 2018 (2018-07-05)<br>entire text, all drawings | 1-15 |

☐ Further documents are listed in the continuation of Box C.   ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 June 2022** | **21 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/014814**

| Patent document cited in search report | | | Publication date (day/month/year) | Patent family member(s) | Publication date (day/month/year) |
|---|---|---|---|---|---|
| JP | 2021-086431 | A | 03 June 2021 | (Family: none) | |
| JP | 2021-166499 | A | 21 October 2021 | (Family: none) | |
| JP | 2018-106557 | A | 05 July 2018 | US 2018/0182030 A1 entire text, all drawings | |

Form PCT/ISA/210 (patent family annex) (January 2015)

## EP 4 502 915 A1

**Patent documents cited in the description**

- JP 2021166499 A

- JP 2017000966 A